# FASCICULE DE BREVET EUROPEEN

(11) **EP 2 213 900 B1**
(45) Date de publication et mention de la délivrance du brevet: **24.03.2021**
(21) Numéro de dépôt: 10151511.2
(22) Date de dépôt: 25.01.2010
(51) Int. Cl.: F16D 55/226, F16D 65/092, F16D 65/097

(54) **Frein à disque à niveau sonore amélioré et patin dudit frein**
Scheibenbremse mit verbessertem Geräuschniveau, und Bremsbelagträger dieser Bremse
Disc brake with improved noise level and shoe of said brake.

(30) Priorité: 30.01.2009 FR 0900420
(43) Date de publication de la demande: 04.08.2010
(73) Titulaire: Robert Bosch GmbH, 70442 Stuttgart (DE)
(72) Inventeur: Dupuis, Vincent, 94100 SAINT MAUR (FR)

(56) Documents cités:
- EP-A- 1 234 994
- DE-A1- 2 211 013
- DE-A1- 10 238 734
- US-A- 6 039 155
- US-A1- 2007 056 812

## Description

### Domaine de l'invention

L'invention est relative à un frein à disque.

### Etat de la technique

L'utilisation de freins à disque implantés sur des roues de véhicules motorisés est connue depuis de nombreuses années. Ces freins à disque fonctionnent de la manière suivante :
- d'une part, un disque métallique est solidarisé en rotation avec la jante de la roue, ledit disque étant dans un plan perpendiculaire à une direction axiale correspondant à l'axe de rotation de la roue,
- d'autre part, sur une fraction de sa circonférence et à sa périphérie, le disque est inséré entre deux patins en regard et aptes à coulisser par une course dite axiale selon ladite direction axiale, et à exercer une pression sur le disque en rotation grâce à un maître cylindre, une pression sur la pédale de freins actionnant ledit maître cylindre par l'intermédiaire d'un liquide hydraulique.

Un patin de frein à disque comprend généralement :
- un support métallique sensiblement plan comprenant à chacune de ses deux extrémités un moyen de fixation à l'étrier,
- une plaquette d'usure assemblée à une face dite intérieure dudit support car en regard dudit disque, ladite plaquette étant destinée à être comprimée contre ledit disque en rotation afin de réduire sa vitesse de rotation par frottement de la plaquette,
- une plaquette antibruit ou « shim » en matériau amortisseur assemblée à l'autre face dite extérieure dudit support par une couche de matière adhésive.

US-A-6 039 155 décrit un frein comportant des plans inclinés orientés à l'opposé de la surface d'application des oreilles lors d'un freinage.

### Problèmes posés

En dépit des efforts réalisés en permanence pour améliorer les freins à disque, le niveau sonore du freinage, notamment dans le cas de freins à disque, constitue toujours une nuisance sonore tant pour le conducteur que pour les personnes extérieures au véhicule. Il n'est qu'à se rappeler, à ce sujet, les récriminations permanentes des personnes qui vivent près d'un carrefour doté de feux rouges.

Même si des efforts sont faits pour insonoriser les véhicules ou les habitations, il importe de limiter autant que possible, le niveau de bruit à sa source, et au niveau du frein à disque lui-même lors d'un freinage.

L'invention a pour objet un frein à disque permettant, lors du freinage, de limiter le niveau sonore du « bruit » de freinage.

Un autre objet de l'invention est constitué par un patin de friction utilisé dans ledit frein à disque.

### Description de l'invention

Selon l'invention, le frein à disque, destiné à coopérer avec un disque solidaire d'une roue d'un véhicule, comprend les caractéristiques techniques selon la revendication 1.

Bien que cela puisse sembler a priori paradoxal, il apparaît que le niveau sonore lors d'un freinage est diminué, grâce à la possibilité pour ledit patin, de présenter, par rapport à ladite armature, un certain jeu sous contrainte, jeu qui correspond à un déplacement minime toutefois dudit patin par rapport à ladite armature lors d'un freinage.

L'homme du métier aurait eu plutôt tendance à penser qu'une fixation rigide du patin à son armature, comme dans la fixation traditionnelle, serait toujours préférable, sur le plan du bruit, à une fixation présentant un certain « jeu », tant le bruit est souvent dû à un jeu présent entre pièces assemblées.

Le bruit de freinage peut sans doute être décomposé entre, d'une part, un bruit dû au frottement entre patin et disque, et un bruit dû aux diverses liaisons entre patin et armature de frein, puis entre armature et véhicule.

Il semble que l'invention, si elle ne réduit pas le bruit entre patin et disque, réduit par contre le bruit dû aux diverses liaisons citées précédemment.

D'une manière générale, les patins de frein à disque présentent une symétrie axiale par rapport à un plan axial passant par ladite direction axiale A et une direction radiale R, ladite direction radiale R étant perpendiculaire à la fois à la direction axiale A et à une direction transversale T correspondant à l'axe formé par lesdites oreilles droite et gauche du patin.

### DESCRIPTION DES FIGURES

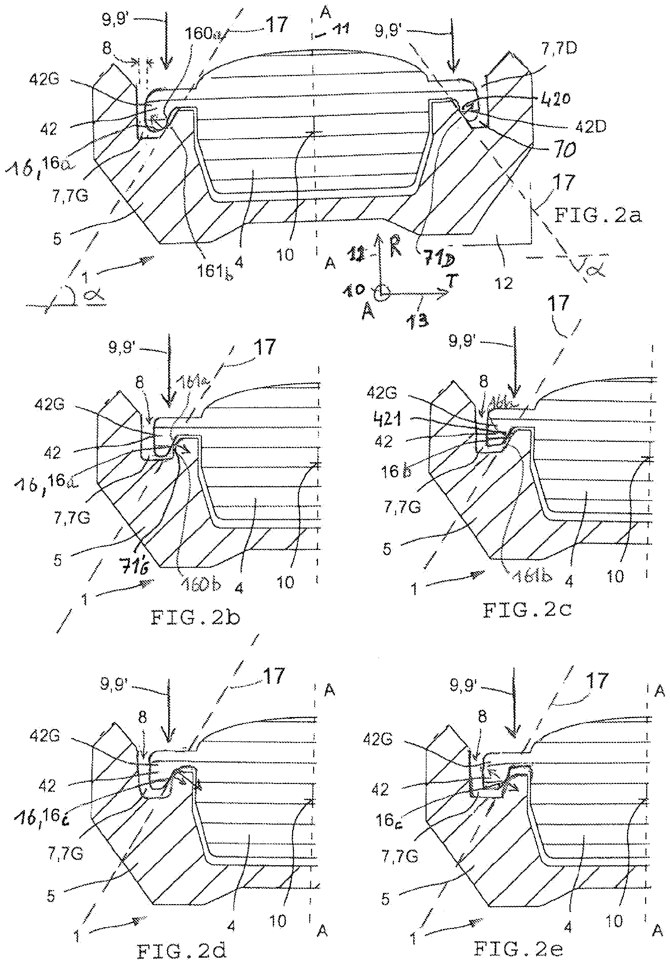

Les figures la à 1b sont relatives à l'état de la technique, les figures 2a à 5b étant relatives à l'invention.
La figure la est une vue partielle, en coupe selon un plan dit transversal (12) de l'assemblage d'un patin (4) avec une armature (3) de frein à disque (1) formée par coopération d'une chape (5) et d'un étrier (6). Ledit plan transversal (12), qui comprend ladite direction transversale T (13) et ladite direction radiale R (11), est perpendiculaire à la direction axiale A (10).
La figure 1b est une en perspective d'une chape (5).
La figure 2a, selon l'invention, est analogue à la figure la selon l'art antérieur. Elle représente, dans ledit plan transversal (12), une première modalité de l'invention dans laquelle ledit contact latéral (16) est un contact (16a) de type « cylindre/plan », avec une partie courbe (160,160a) solidaire de ladite partie mâle (43) de ladite oreille (42), et une partie plane (161, 161b) solidaire de ladite partie femelle (70) dudit moyen de guidage (7).
Les figures 2b à 2e sont analogues entre elles et correspondent à la demi-partie gauche de la figure 2a, les demi-moitiés droite et gauche de la figure 2a étant sensiblement symétriques par rapport au plan radial passant par la direction radiale R (11).
La figure 2b illustre une autre modalité, inverse de celle de la figure 2a, dans laquelle ladite partie courbe (160,160b) est solidaire de ladite partie femelle (70), ladite partie plane (161, 161a) étant solidaire de ladite partie mâle (43) de ladite oreille (42).
La figure 2c illustre une autre modalité dans laquelle ledit contact latéral (16) est un contact latéral (16b) du type « plan / plan », une partie plane (161, 161a) de ladite partie mâle (43) coopérant avec une partie plane (161, 161b) de ladite partie femelle (70).
Les figures 2d et 2e illustrent deux autres modalités dans lesquelles ledit contact latéral (16) est un contact latéral (16c) du type « cylindre / cylindre », une partie courbe (160, 160a) de ladite partie mâle (43) coopérant avec une partie courbe (160, 160b) de ladite partie femelle (70). Sur la figure 2d, les deux parties courbes (160a, 160b) présentent des rayons de courbure orientés selon la même direction (représentés par des flèches sur
les figures 2a, 2b, 2d et 2e), tandis que sur la figure 2e, les deux parties courbes (160a, 160b) présentent des rayons de courbure orientés selon des directions opposées.

De manière connue, comme illustré, le frein comporte dans l'armature, un tunnel central de réception du support de plaquette d'usure munie de ladite plaquette d'usure prolongée aux deux extrémités transversales opposées par des tunnels de réception des oreilles du patin. Lors d'un freinage, au moins un des patins est poussé, directement ou indirectement par le piston de frein, en direction du disque pour être appliqué contre ce dernier. Le patin effectue une translation rectiligne perpendiculaire au plan du disque guidée par lesdits tunnels.

Lors du contact entre le disque et le patin, ce dernier est entraîné en rotation par le frottement sur le disque. L'armature s'oppose à cet entraînement principalement au niveau des oreilles.

Selon l'invention, on contrôle cet entraînement en ménageant un jeu fonctionnel permettant un entraînement limité ou contact glissant et en formant des pentes en plan incliné sur au moins certaines des surfaces de l'armature reprenant l'effort d'entraînement. Dans les exemples illustrés, les plans inclinés sont situés sur les parois d'au moins un des tunnels transversaux de réception des oreilles se trouvant du côté du tunnel central de réception du support de la plaquette d'usure et de ladite plaquette.

Lors d'un freinage, l'oreille amont monte sur le plan incliné.

Avantageusement, des moyens de rappel élastiques coopèrent avec lesdits plans inclinés pour, en fin de freinage, faire descendre le plan incliné à ladite oreille amont (centrant ainsi le patin).

La diminution de la pente α diminue la participation du patin à la rigidité sous couple de freinage du frein désigné dans la technique par l'expression « push-pull ».

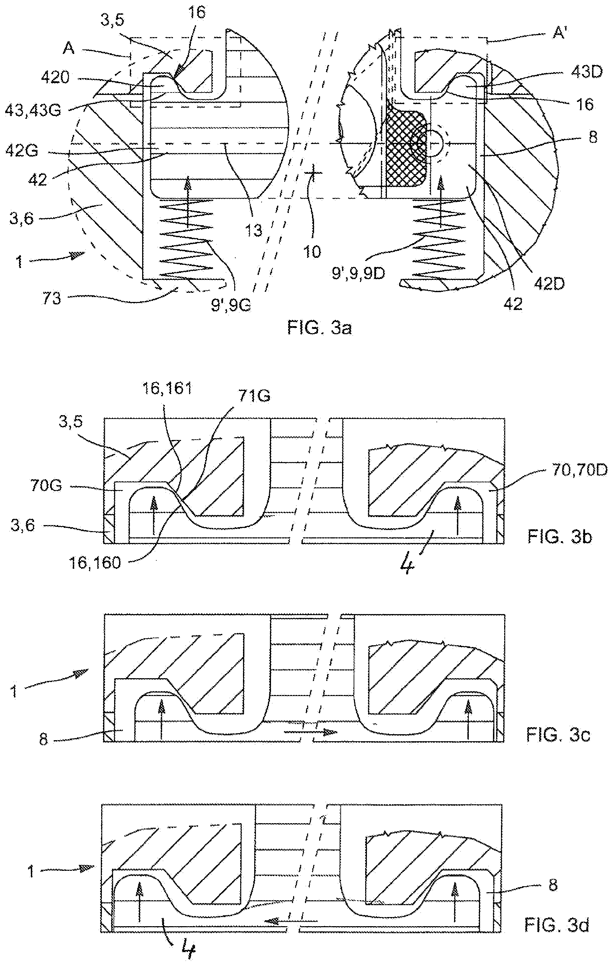

Les figures 3a à 3d sont des vues schématiques partielles, en coupe selon ledit plan transversal (12), qui illustrent la coopération des dites parties mâle (43, 43D, 43G) du patin (4) et femelle (70, 70D, 70G) du moyen de guidage axial (7) de ladite armature (3). A noter que ces figures sont analogues aux figures 2a à 2e, moyennant une rotation de 180°C autour de ladite direction axiale A (10).

Sur la figure 3a, en l'absence de freinage, le patin (4), centré par rapport à ladite armature (3), est dans ladite position initiale.

La figure 3b représente un agrandissement partiel des parties A et A' encadrées en traits pointillés de la figure 3a.

La figure 3c, analogue à la figure 3a, illustre un freinage dans le cas où le disque et la roue se déplaçant comme indiqué par la flèche, le patin (4) est entraîné vers la droite.

La figure 3d, analogue à la figure 3c, illustre un freinage dans le cas inverse où le disque et la roue se déplaçant vers la gauche, le patin (4) est entraîné vers la gauche.

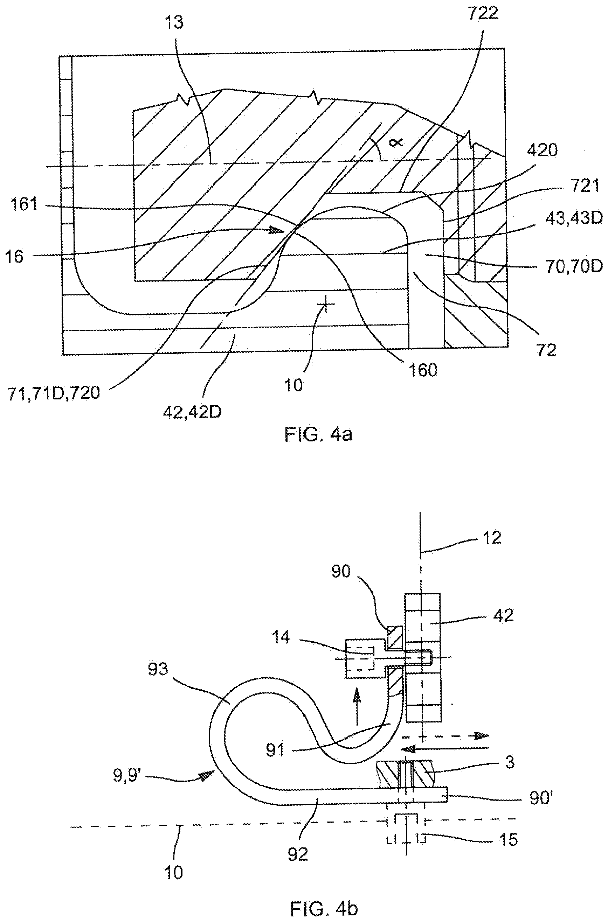

La figure 4a est une vue agrandie de la partie droite de la figure 3b ou partie encadrée A' de la figure 3a.
La figure 4b est une vue partielle en coupe dans un plan axial comprenant ladite direction axiale (10) du ressort (9') formant le moyen de rappel (9) solidarisant l'oreille (42) du patin (4) à l'armature (3).

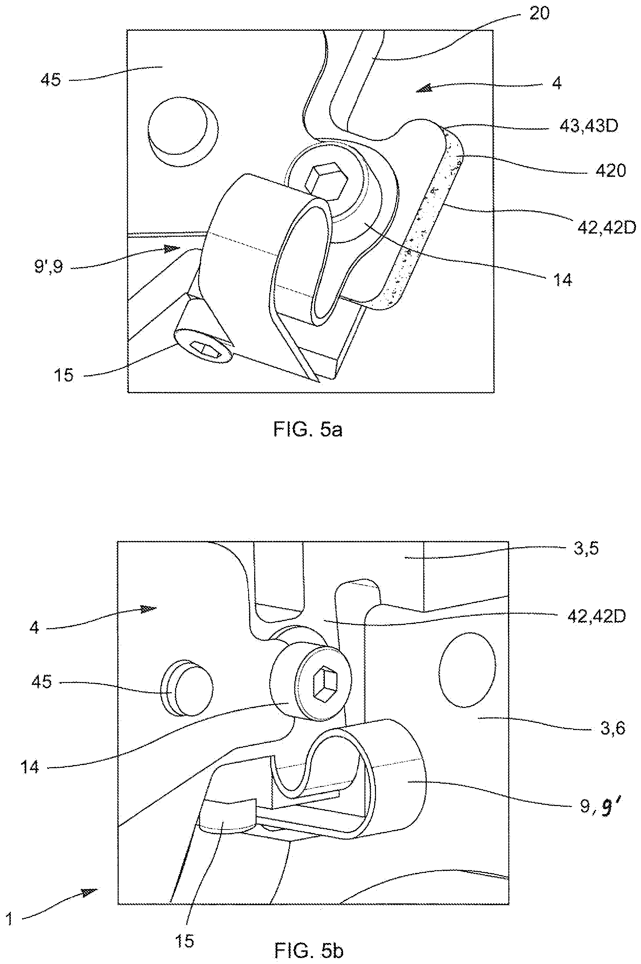

La figure 5a est une vue partielle en perspective de la coopération, selon l'invention, d'un patin (4) avec le ressort (9') de la figure 4b.

La figure 5b est une vue partielle en perspective du patin (4) de la figure 5a coopérant avec l'armature (3) grâce au ressort (9,9').

L'invention a principalement pour objet un frein à disque selon la revendication 1.

L'invention a aussi pour objet un tel frein à disque dans lequel ledit contact latéral est un contact latéral du type « cylindre / plan », une partie courbe de ladite partie mâle ou de ladite partie femelle coopérant avec une partie plane respectivement de ladite partie femelle ou de ladite partie mâle.

L'invention a également pour objet un tel frein à disque dans lequel ladite partie femelle comprend ladite partie plane formant une paroi latérale plane et dans lequel ladite partie mâle comprend ladite partie courbe formant une paroi latérale, de manière à former ledit contact « cylindre / plan ».

L'invention a aussi pour objet un tel frein à disque dans lequel ledit contact latéral est un contact latéral du type « plan / plan », une partie plane de ladite partie mâle coopérant avec une partie plane de ladite partie femelle.

L'invention a également pour objet un tel frein à disque dans lequel ledit contact latéral est un contact latéral du type « cylindre / cylindre », une partie courbe de ladite partie mâle coopérant avec une partie courbe de ladite partie femelle, les deux parties courbes présentent des rayons de courbure orientés soit selon la même direction, soit selon des directions opposées.

L'invention a aussi pour objet un tel frein dans lequel ledit angle α dudit plan de tangence va de 30° à 70°, et de préférence de 40° à 60°.

L'invention a également pour objet un tel frein dans lequel ladite partie femelle dudit moyen de guidage axial est formée par coopération d'un évidement axial, par exemple formé dans ladite chape, chaque évidement axial étant délimité par :
- un rebord avant formant ladite paroi plane, ou une paroi courbe, coopérant avec ladite partie mâle de ladite oreille à la manière d'un crochet,
- une paroi dite arrière, formant une butée arrière pour ladite partie mâle,
- une paroi dite supérieure reliant ledit rebord à ladite paroi arrière,
avec une paroi dite inférieure, par exemple formée dans ledit étrier, ou avec ledit moyen de rappel.

L'invention a aussi pour objet un tel frein dans lequel ledit moyen de rappel comprend un moyen de rappel dit droit et un moyen de rappel dit gauche, chaque moyen de rappel, droit ou gauche, étant solidaire, à une de ses extrémités à ladite oreille latérale correspondante, droite ou gauche, grâce à un dit premier moyen de fixation, et, à son autre extrémité, à ladite armature, grâce à un dit second moyen de fixation.

L'invention a également pour objet un tel frein dans lequel ledit moyen de rappel est un ressort à lame métallique, dont une partie, dite supérieure, est solidaire de ladite oreille latérale, dont une autre partie, dite inférieure, prend appui contre ladite armature, de manière à appliquer en permanence ladite partie mâle dans ladite partie femelle, et dont une partie intermédiaire est recourbée de manière à ce que ledit patin puisse s'écarter dudit disque lorsque ledit moyen d'application, typiquement un piston, n'est plus activé en fin de freinage.

L'invention a aussi pour objet un frein selon les revendications dépendantes 10 et 11.

### DESCRIPTION DETAILLEE DE L'INVENTION

Dans le frein à disque (1) selon l'invention, et comme illustré sur les figures 2a, 2b, 3a à 3d et 4a, ledit contact latéral (16) peut être un contact latéral (16a) du type « cylindre / plan », une partie courbe (160, 160a, 160b) de ladite partie mâle (43) ou de ladite partie femelle (70) coopérant avec une partie plane (161, 161a, 161b) respectivement de ladite partie femelle (70) ou de ladite partie mâle (43), de manière à permettre, grâce au jeu latéral (8), ledit déplacement relatif de ladite partie mâle (433) par rapport à ladite partie femelle (70).

Ainsi, comme illustré sur la figure 2a, ladite partie femelle (70) du moyen de guidage (7) peut comprendre une paroi latérale plane (71) formant ladite partie plane (161b) dudit contact « cylindre / plan », tandis que ladite partie mâle (43) comprend une paroi latérale (44) formant ladite partie courbe (160a) dudit contact « cylindre / plan » (16a).

Toutefois, comme illustré sur la figure 2b, il est possible d'avoir la disposition inverse : ladite partie mâle (43) peut comprendre ladite partie plane (161a) formant ledit plan dudit contact « cylindre / plan », tandis que ladite partie femelle (70) comprend ladite partie courbe (160b) formant ledit cylindre dudit contact « cylindre / plan » (16a).

Selon une autre modalité de l'invention illustrée sur la figure 2c, ledit contact latéral (16) peut être un contact latéral (16b) du type « plan / plan », une partie plane (161, 161a) de ladite partie mâle (43) coopérant avec une partie plane (161, 161b) de ladite partie femelle (70).

Selon une autre modalité de l'invention illustrée sur les figures 2d et 2e, ledit contact latéral (16) peut être un contact latéral (16c) du type « cylindre / cylindre », une partie courbe (160, 160a) de ladite partie mâle (43) coopérant avec une partie courbe (160, 160b) de ladite partie femelle (70), les deux parties courbes (160a, 160b) présentent des rayons de courbure orientés soit selon la même direction, comme représenté sur la figure 2d, soit selon des directions opposées, comme représenté sur la figure 2e.

Selon l'invention, ledit angle α dudit plan de tangence (17) peut aller de 30° à 70°, et de préférence de 40° à 60°.

Comme illustré notamment sur les figures 3a à 3d, ledit moyen de guidage axial (7) peut être formé par coopération de ladite chape (5) et dudit étrier (6).

Ladite partie femelle (70) dudit moyen de guidage axial (7) peut être formée par coopération d'un évidement axial (72), par exemple formé dans ladite chape (5), chaque évidement axial (72) étant délimité par :
- un rebord avant (720) formant ladite paroi plane (71), ou une paroi courbe (71'), coopérant avec ladite partie mâle (43) de ladite oreille (42) à la manière d'un crochet,
- une paroi dite arrière (721), formant une butée arrière pour ladite partie mâle (43),
- une paroi dite supérieure (722) reliant ledit rebord à ladite paroi arrière,
avec une paroi dite inférieure (73), par exemple formée dans ledit étrier (6), ou avec ledit moyen de rappel (9).

Selon l'invention, et comme illustré schématiquement sur la figure 3a, ledit moyen de rappel (9) peut comprendre un moyen de rappel dit droit (9D) et un moyen de rappel dit gauche (9G), chaque moyen de rappel, droit ou gauche, étant solidaire, à une de ses extrémités (90) à ladite oreille latérale (42) correspondante, droite (42D) ou gauche (42G), grâce à un dit premier moyen de fixation (14), et, à son autre extrémité (90'), à ladite armature (3), grâce à un dit second moyen de fixation (15).

Comme illustré sur les figures 4b, 5a et 5b, ledit moyen de rappel (9) peut être un ressort à lame métallique (9'), dont une partie (91), dite supérieure, est solidaire de ladite oreille latérale (42), dont une autre partie (92), dite inférieure, prend appui contre ladite armature (3), de manière à appliquer en permanence ladite partie mâle (43) dans ladite partie femelle (70), et dont une partie intermédiaire (93) est recourbée de manière à ce que ledit patin (4) puisse s'écarter dudit disque (2) lorsque ledit moyen d'application, typiquement un piston commandé par un cylindre de roue, n'est plus activé en fin de freinage.

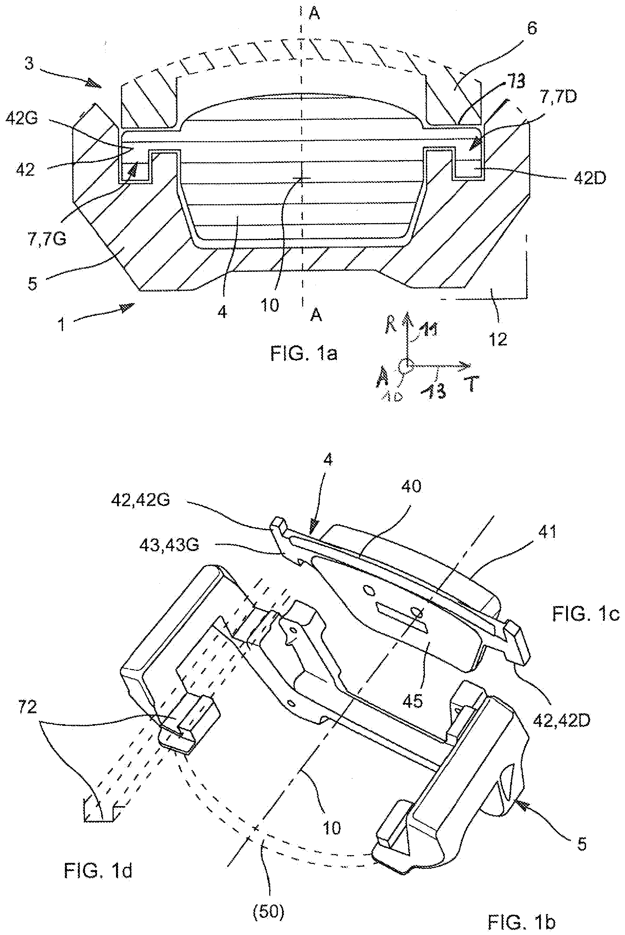

Comme représenté en traits pointillés sur la figure 1b, ladite chape (5) peut comprendre, en outre, un bras de renforcement (50), de manière à la rigidifier ladite armature (3) et à diminuer sa déformation durant ledit freinage.

Un autre objet de l'invention est constitué par un patin (4) d'un frein à disque (1) selon l'invention, comprenant un support (40) et une plaquette d'usure (41) assemblée audit support (40), ledit support (40) comprenant à chacune de ses extrémités latérales, une oreille latérale (42) d'assemblage à une armature de frein (3), avec une oreille D dite droite (42D) et une oreille G dite gauche (42G), chaque oreille D (42D) ou G (42G) étant solidaire d'un moyen de rappel (9), droit (9D) ou gauche (9G), par exemple d'un ressort (9'), apte à assurer un déplacement inverse dudit patin (4), de ladite position finale à ladite position initiale.

Dans ce patin, chacune des dites oreilles latérales (42, 42D, 42G) peut présenter un bord, soit un bord arrondi (420) destiné à former ledit « cylindre » (160), soit un bord plan (421) destiné à former ledit « plan » (161) du contact latéral (16), de manière à ce que lesdites oreilles D (42D) et G (42G) soient aptes à coopérer avec ladite armature comprenant ledit « plan » (161) pour former ledit contact du type « cylindre sur plan » (16), et de manière à rendre possible un faible déplacement latéral ou jeu sous contrainte, par exemple de l'ordre du mm, dudit patin (4) par rapport à ladite armature (3) lors d'un freinage, d'une position initiale à une position finale.

On peut voir, sur la figure 5a, l'oreille latérale droite (42, 42D) d'un tel patin (4).

Ce patin peut comprendre, sur la face dudit support (40) opposée à ladite plaquette d'usure (41), une couche d'un matériau antibruit ou « shim » (45).

Comme illustré sur les figures 4b et 5a, chaque moyen de rappel (9, 9D, 9G) peut être assemblé à ladite oreille (42, 42D, 42G) grâce audit premier moyen de fixation (14), chaque moyen de rappel comprenant un ressort à lame métallique (9'), dont une partie (91), dite supérieure, est solidaire de ladite oreille, dont une autre partie(92), dite inférieure, est apte à être solidarisée à ladite armature (3), de manière à pouvoir appliquer en permanence ladite partie mâle (43) dans ladite partie femelle (70) de ladite armature (3), et dont une partie intermédiaire (93) est recourbée, de manière à ce que ledit patin (4) soit apte à s'écarter dudit disque (2) lorsque ledit moyen de compression (11) n'est plus activé en fin de freinage.

### Exemple de réalisation:

Les figures 2a à 2ee constituent représentent cinq modalités différentes d'exemples de réalisation selon l'invention. La modalité de la figure 2a a été plus spécialement détaillée sur les figures 3a à 5b.

Les figures 3a à 5b constituent un exemple de réalisation d'une part, d'un frein à disque (1) doté de patins (4) selon l'invention, comme illustré sur la figure 5b, et d'autre part, de patins (4) selon l'invention, comme illustré sur la figure 5a, destinés soit à équiper des freins neufs soit à remplacer des patins usés.

### Avantages de l'invention

Le frein (1) et les patins (4) selon l'invention permettent effectivement de réduire le bruit associé au freinage, que ce soit en marche avant ou en marche arrière. Ils contribuent ainsi à limiter fortement les nuisances sonores des véhicules à moteur lors du freinage. Par ailleurs, dans les freins selon l'invention, les patins selon l'invention sont aisés à changer.

Par ailleurs, la fabrication des freins et patins selon l'invention ne nécessite ne présente pas de surcoût significatif par rapport aux freins et patins de l'état de la technique.

Avantageusement, le frein selon l'invention est du type « push-pull » dans lequel une partie du couple de freinage passe par le support 40 de la plaquette.

**LISTE DES REPERES**

| | |
|---|---|
| Frein à disque | 1 |
| Direction axiale | 10 |
| Moyen d'application des patins | 11 |
| Piston | 110 |
| Fluide hydraulique | 111 |
| Plan transversal | 12 |
| Direction transversale | 13 |
| Premier moyen de fixation (9-4) | 14 |
| Second moyen de fixation (9-3) | 15 |
| Contact latéral | 16 |
| Contact latéral « cylindre/plan » | 16a |
| Contact latéral « plan/plan » | 16b |
| Contact latéral cylindre/cylindre | 16c |
| «cylindre » de 16/partie courbe | 160, 160a, 160b |
| « plan » de 16/partie plane | 161, 161a, 161b |
| Plan de tangence | 17 |
| Direction radiale | 18 |
| Disque solidaire d'une roue | 2 |
| Armature | 3 |
| Patin | 4 |
| Support | 40 |
| Plaquette d'usure | 41 |
| Oreille latérale | 42, 42D,42G |
| Bord arrondi | 420 |
| Partie mâle de 42 | 43, 43D, 43G |
| Paroi latérale courbe ou plane | 44, 44D, 44G |
| Couche de matériau antibruit ... | 45 |
| Chape de 3 | 5 |
| Bras de renforcement | 50 |
| Etrier de 3 | 6 |
| Moyen de guidage axial | 7, 7D, 7G |
| Partie femelle | 70, 70D, 70G |
| Paroi latérale de 70 « plan » | 71, 71D, 71G |
| Paroi latérale de 70 « courbe » | 71', 71D',71G' |
| Evidement axial | 72 |
| Rebord avant | 720 |
| Paroi arrière | 721 |
| Paroi supérieure | 722 |
| Paroi inférieure | 73 |
| Jeu latéral entre 43 et 70 | 8 |
| Moyen de rappel | 9, 9D, 9G |
| Ressort | 9' |
| Extrémités de 9 | 90, 90' |
| Partie supérieure | 91 |
| Partie inférieure | 92 |
| Partie intermédiaire | 93 |

## Revendications

1. Frein à disque (1) d'un véhicule comprenant une armature (3) portant et guidant deux patins (4) dans lequel :
a) le patin (4) comprend un support (40) muni d'une plaquette d'usure (41) comprenant deux oreilles latérales (42) d'assemblage à l'armature (3), à chaque extrémité transversale du support (40),
b) l'armature (3) comprend des moyens de guidage axiaux (7), des oreilles pour le déplacement axial du patin (4) contre le disque , chaque moyen de guidage (7) comprenant une partie femelle (70), évidée, et coopérant avec une partie mâle (43) de l'oreille (42) correspondante, de manière à transmettre à l'armature (3) l'effort exercé par le disque (2) sur le patin (4)
**caractérisé en ce que**
- les parties mâles (43) et femelles (70) coopèrent avec un jeu latéral sous contrainte (8) de manière à permettre un déplacement relatif des parties mâles (43) par rapport aux parties femelles (70), les parties mâles (43) passant d'une position initiale sans freinage, à une position finale de freinage, le déplacement correspondant au jeu latéral sous contrainte (8),
- le frein (1) comprend un moyen de rappel (9) de manière à faire repasser les parties mâles (43) par rapport aux parties femelles (70), de la position finale à la position initiale après le freinage engendrant la contrainte,
- les parties mâles (43) et femelles (70) coopèrent avec un contact latéral (6), glissant présentant un plan de tangence (17) incliné d'un angle α avec la direction transversale (13), l'angle α allant par exemple de 30° à 70°, sur une surface de l'armature reprenant l'effort d'entrainement du patin lors du freinage, de manière à réduire le bruit ou les nuisances sonores engendrées par freinage.

2. Frein à disque selon la revendication 1,
dans lequel le contact latéral (16) est un contact latéral (16a) du type « cylindre/plan », une partie courbe (160, 160a, 160b) de la partie mâle (43) ou de la partie femelle (70) coopérant avec une partie plane (161, 161a, 161b) respectivement de la partie femelle (70) ou de la partie mâle (43).

3. Frein à disque selon la revendication2,
dans lequel la partie femelle (70) comprend la partie plane (161, 161b) formant une paroi latérale plane (71) et la partie mâle (43) comprend la partie courbe (160, 1601a) formant une paroi latérale (44), de manière à former le contact « cylindre/plan » (16a).

4. Frein à disque selon la revendication 1,
dans lequel le contact latéral (16) est un contact latéral (16b) du type « plan/plan », une partie plane (161, 161a) de la partie mâle (43) coopérant avec une partie plane (161, 161b) de la partie femelle (70).

5. Frein à disque selon la revendication 1,
dans lequel le contact latéral (16) est un contact latéral (16c) du type « cylindre/cylindre », une partie courbe (160, 160a) de la partie mâle (43) coopérant avec une partie courbe (160, 160a) de la partie femelle (70), les deux parties courbes (160a, 160b) présentent des rayons de courbure orientées selon la même direction, ou selon des directions opposées.

6. Frein selon une quelconque des revendications 1 à 5,
dans lequel l'angle α du plan de tangence (17) va de 30° à 70°, et de préférence de 40° à 60°.

7. Frein selon une quelconque des revendications 1 à 6,
dans lequel la partie femelle (70) du moyen de guidage axial (7) est formée par coopération d'un évidement axial (72), par exemple formé dans la chape, chaque évidement axial (72) étant délimité par :
- un rebord avant (720) formant la paroi plane (71), ou une paroi courbe (71'), coopérant avec partie mâle (43) de l'oreille (42) à la manière d'un crochet,
- une paroi arrière (721), formant une butée arrière pour la partie mâle (43),
- une paroi supérieure (722) reliant le rebord à la paroi arrière,
avec une paroi inférieure (73), par exemple formée dans l'étrier (6), ou avec le moyen de rappel (9).

8. Frein selon l'une quelconque des revendications 1 à 7,
dans lequel le moyen de rappel (9) comprend un moyen de rappel droit (9d) et un moyen de rappel gauche (9G), chaque moyen de rappel, droit ou gauche, étant solidaire, à une de ses extrémités (90) à l'oreille latérale correspondante (42), droite (42D) ou gauche (42G), par un premier moyen de fixation (14), et, à son autre extrémité (90'), à l'armature (3), par un second moyen de fixation (15).

9. Frein selon les revendications 7 et 8,
dans lequel le moyen de rappel (9) est un ressort à lame métallique (9'), dont une partie (91), supérieure, est solidaire de l'oreille latérale (42), dont une autre partie (92), inférieure, prend appui contre l'armature (3), de manière à appliquer en permanence la partie mâle (43) dans la partie femelle (70), et dont une partie intermédiaire (93) est recourbée de manière à ce que le patin (4) puisse s'écarter du disque lorsque le moyen d'application, typiquement un piston, n'est plus activé en fin de freinage.

10. Frein à disque (1) selon la revendication 1,
**caractérisé en ce que** les deux patins (4) comprennent chacun un support (40) assemblé à une plaquette d'usure (41) et comprenant à chacune de ses extrémités latérales, une oreille latérale (42) d'assemblage à une armature de frein (3), avec une oreille droite (42D) et une oreille gauche (42G), comportant chacune un plan incliné d'un angle α compris entre 30° et 70° par rapport à la direction transversale du patin.
dans lequel chacune des oreilles latérales (42, 42D, 42G) présente un bord, soit un bord arrondi (420) destiné à former un « cylindre » (160, soit un bord plan (421) destiné à former un plan » (161) du contact latéral (16), de manière à ce que les oreilles droite (42D) et gauche (42G) coopèrent avec armature comprenant un « plan » (161) pour former le contact du type « cylindre sur plan » (16), et de manière à rendre possible un faible déplacement latéral ou jeu sous contrainte, du patin (4) par rapport à l'armature (3) lors d'un freinage, d'une position initiale à une position finale.

11. Frein selon la revendication 10,
**caractérisé en ce qu'**
il comporte des moyens de rappel (9, 9D, 9G) chacun assemblé à l'oreille (42, 42D, 42g) d'un patin, chaque moyen de rappel comprenant un ressort à lame métallique (9'), dont une partie (91), supérieure, est solidaire de l'oreille et une autre partie (92), inférieure, prend appui sur l'armature (3), de manière à pouvoir appliquer en permanence la partie mâle (43) dans la partie femelle (70) de l'armature (3), et dont une partie intermédiaire (93) est recourbée, pour que le patin (4) puisse s'écarter du disque (2) lorsque le moyen de compression (11) n'est plus activé en fin de freinage.

## Patentansprüche

1. Scheibenbremse (1) eines Fahrzeugs, umfassend einen Anker (3), der zwei Beläge (4) trägt und führt, wobei:
a) der Belag (4) einen Träger (40) umfasst, der mit einer Verschleißplatte (41) versehen ist, die an jedem Querende des Trägers (40) zwei seitliche Vorsprünge (42) zur Verbindung mit dem Anker (3) umfasst,
b) der Anker (3) axiale Führungsmittel (7) und Vorsprünge zur axialen Verschiebung des Belags (4) gegen die Scheibe umfasst, wobei jedes Führungsmittel (7) einen weiblichen Teil (70) umfasst, der ausgespart ist und mit einem männlichen Teil (43) des entsprechenden Vorsprungs (42) zusammenwirkt, um die von der Scheibe (2) auf den Belag (4) ausgeübte Kraft auf den Anker (3) zu übertragen,
**dadurch gekennzeichnet, dass**
- die männlichen (43) und weiblichen Teile (70) mit einem seitlichen Belastungsspiel (8) zusammenwirken, um eine relative Verschiebung der männlichen Teile (43) in Bezug auf die weiblichen Teile (70) zu ermöglichen, wobei sich die männlichen Teile (43) von einer Ausgangsposition ohne Bremsen in eine Bremsendposition bewegen, wobei die Verschiebung dem seitlichen Belastungsspiel (8) entspricht,
- die Bremse (1) ein Rückstellmittel (9) umfasst, um die männlichen Teile (43) in Bezug auf die weiblichen Teile (70) nach dem die Belastung erzeugenden Bremsvorgang aus der Endposition in die Ausgangsposition zurückzubringen,
- die männlichen (43) und weiblichen Teile (70) mit einem seitlichen Gleitkontakt (6) zusammenwirken, der eine Tangentialebene (17) aufweist, die unter einem Winkel α zur Querrichtung (13) geneigt ist, wobei der Winkel α beispielsweise von 30° bis 70° reicht, wobei eine Fläche des Ankers die Antriebskraft des Belags beim Bremsvorgang aufnimmt, um die Geräusche oder die Lärmbelastung, die durch den Bremsvorgang verursacht werden, zu reduzieren.

2. Scheibenbremse nach Anspruch 1,
wobei der seitliche Kontakt (16) ein seitlicher Kontakt (16a) des Typs "Zylinder/Ebene" ist, wobei ein gekrümmter Abschnitt (160, 160a, 160b) des männlichen Teils (43) oder des weiblichen Teils (70) mit einem ebenen Abschnitt (161, 161a, 161b) des weiblichen Teils (70) bzw. des männlichen Teils (43) zusammenwirkt.

3. Scheibenbremse nach Anspruch 2,
wobei der weibliche Teil (70) den ebenen Abschnitt (161, 161b) umfasst, der eine ebene Seitenwand (71) ausbildet, und der männliche Teil (43) den gekrümmten Abschnitt (160, 1601a) umfasst, der eine Seitenwand (44) ausbildet, um den "Zylinder/Ebene"-Kontakt (16a) auszubilden.

4. Scheibenbremse nach Anspruch 1,
wobei der seitliche Kontakt (16) ein seitlicher Kontakt (16b) des Typs "Ebene/Ebene" ist, wobei ein ebener Abschnitt (161, 161a) des männlichen Teils (43) mit einem ebenen Abschnitt (161, 161b) des weiblichen Teils (70) zusammenwirkt.

5. Scheibenbremse nach Anspruch 1,
wobei der seitliche Kontakt (16) ein seitlicher Kontakt (16c) des Typs "Zylinder/Zylinder" ist, wobei ein gekrümmter Abschnitt (160, 160a) des männlichen Teils (43) mit einem gekrümmten Abschnitt (160, 160a) des weiblichen Teils (70) zusammenwirkt, wobei die beiden gekrümmten Abschnitte (160a, 160b) Krümmungsradien aufweisen, die in die gleiche Richtung oder in entgegengesetzte Richtungen ausgerichtet sind.

6. Bremse nach einem der Ansprüche 1 bis 5,
wobei der Winkel α der Tangentialebene (17) von 30° bis 70° und vorzugsweise von 40° bis 60° reicht.

7. Bremse nach einem der Ansprüche 1 bis 6,
wobei der weibliche Teil (70) des axialen Führungsmittels (7) durch Zusammenwirken einer axialen Aussparung (72) ausgebildet ist, die beispielsweise im Gabelstück ausgebildet ist, wobei jede axiale Aussparung (72) begrenzt ist durch:
- eine Vorderkante (720), die die ebene Wand (71) oder eine gebogene Wand (71') ausbildet, die mit dem männlichen Teil (43) des Vorsprungs (42) in der Art eines Hakens zusammenwirkt,
- eine hintere Wand (721), die einen hinteren Anschlag für das männliche Teil (43) ausbildet,
- eine obere Wand (722), die die Kante mit der hinteren Wand,
mit einer unteren Wand (73), die beispielsweise im Sattel (6) ausgebildet ist, oder mit dem Rückstellmittel (9) verbindet.

8. Bremse nach einem der Ansprüche 1 bis 7,
wobei das Rückstellmittel (9) ein rechtes Rückstellmittel (9d) und ein linkes Rückstellmittel (9G) umfasst, wobei sowohl das rechte als auch das linke Rückstellmittel an einem ihrer Enden (90) durch ein erstes Befestigungsmittel (14) mit dem entsprechenden rechten (42D) bzw. linken (42G) Vorsprung (42) und an ihrem anderen Ende (90') durch ein zweites Befestigungsmittel (15) mit dem Anker (3) fest verbunden sind.

9. Bremse nach Anspruch 7 und 8,
wobei das Rückstellmittel (9) eine metallene Blattfeder (9') ist, deren oberer Teil (91) mit dem seitlichen Vorsprung (42) fest verbunden ist, dessen anderer, unterer Teil (92) am Anker (3) anliegt, um den männlichen Teil (43) dauerhaft in den weiblichen Teil (70) einzusetzen, und dessen Zwischenteil (93) so gekrümmt ist, dass sich der Belag (4) von der Scheibe wegbewegen kann, wenn das Einsetzmittel, typischerweise ein Kolben, am Ende des Bremsvorgangs nicht mehr aktiviert ist.

10. Scheibenbremse (1) nach Anspruch 1,
**dadurch gekennzeichnet, dass** die beiden Beläge (4) jeweils einen Träger (40) umfassen, der mit einer Verschleißplatte (41) verbunden ist und an jedem seiner seitlichen Enden einen seitlichen Vorsprung (42) zur Verbindung mit einem Bremsanker (3) aufweist, mit einem rechten Vorsprung (42D) und einem linken Vorsprung (42G), die jeweils eine Ebene aufweisen, die unter einem Winkel α zwischen 30° und 70° in Bezug auf die Querrichtung des Belags geneigt ist, wobei jeder der seitlichen Vorsprünge (42, 42D, 42G) einen Rand aufweist, der dazu bestimmt ist, entweder einen gekrümmten Rand (420) zur Ausbildung eines "Zylinders" (160) oder einen ebenen Rand (421) zur Ausbildung einer "Ebene" (161) des seitlichen Kontakts (16) auszubilden, so dass der rechte (42D) und der linke Vorsprung (42G) mit dem Anker zusammenwirken, der eine "Ebene" (161) umfasst, um den Kontakt des Typs "Zylinder auf Ebene" (16) auszubilden und um bei einem Bremsvorgang eine geringe seitliche Verschiebung oder ein Belastungsspiel des Belags (4) in Bezug auf den Anker (3) von einer Ausgangsposition in eine Endposition zu ermöglichen.

11. Bremse nach Anspruch 10,
**dadurch gekennzeichnet, dass** sie Rückstellmittel (9, 9D, 9G) aufweist, die jeweils mit dem Vorsprung (42, 42D, 42g) eines Belags verbunden sind, wobei jedes Rückstellmittel eine metallene Blattfeder (9') umfasst, deren oberer Teil (91) mit dem Vorsprung fest verbunden ist und dessen anderer, unterer Teil (92) am Anker (3) anliegt, um den männlichen Teil (43) dauerhaft in den weiblichen Teil (70)

## Claims

1. Disc brake (1) of a vehicle, comprising a frame (3) carrying and guiding two pad assemblies (4), wherein:
a) the pad assembly (4) comprises a support (40) provided with a wear pad (41) comprising two lateral lugs (42) for assembly to the frame (3), at each transverse end of the support (40),
b) the frame (3) comprises axial guide means (7), lugs for the axial movement of the pad assembly (4) against the disc, each guide means (7) comprising a recessed female part (70) cooperating with a male part (43) of the corresponding lug (42) so as to transmit to the frame (3) the force exerted by the disc (2) on the pad assembly (4),
**characterized in that**
- the male (43) and female (70) parts cooperate with a lateral clearance (8) under stress so as to allow a relative movement of the male parts (43) with respect to the female parts (70), the male parts (43) passing from an initial position without braking to a final braking position, the movement corresponding to the lateral clearance (8) under stress,
- the brake (1) comprises a return means (9) so as to pass the male parts (43) with respect to the female parts (70) back from the final position to the initial position after the braking generating the stress,
- the male (43) and female (70) parts cooperating with a sliding lateral contact (6) having a tangency plane (17) inclined by an angle α with the transverse direction (13), the angle α ranging for example from 30° to 70°, on a surface of the frame taking up the driving force of the pad assembly during the braking, so as to reduce the noise or the sound nuisance generated by the braking.

2. Disc brake according to Claim 1,
wherein the lateral contact (16) is a lateral contact (16a) of the "cylinder/plane" type, a curved part (160, 160a, 160b) of the male part (43) or of the female part (70) cooperating with a planar part (161, 161a, 161b) respectively of the female part (70) or of the male part (43).

3. Disc brake according to Claim 2,
wherein the female part (70) comprises the planar part (161, 161b) forming a planar lateral wall (71), and the male part (43) comprises the curved part (160, 1601a) forming a lateral wall (44), so as to form the "cylinder/plane" contact (16a).

4. Disc brake according to Claim 1,
wherein the lateral contact (16) is a lateral contact (16b) of the "plane/plane" type, a planar part (161, 161a) of the male part (43) cooperating with a planar part (161, 161b) of the female part (70).

5. Disc brake according to Claim 1,
wherein the lateral contact (16) is a lateral contact (16c) of the "cylinder/cylinder" type, a curved part (160, 160a) of the male part (43) cooperating with a curved part (160, 160a) of the female part (70), the two curved parts (160a, 160b) having radii of curvature oriented in the same direction, or in opposite directions.

6. Brake according to any one of Claims 1 to 5, wherein the angle α of the tangency plane (17) ranges from 30° to 70°, preferably from 40° to 60°.

7. Brake according to any one of Claims 1 to 6, wherein the female part (70) of the axial guide means (7) is formed by cooperation of an axial recess (72), for example formed in the carrier, each axial recess (72) being delimited by:
- a front edge (720) forming the planar wall (71) or a curved wall (71'), cooperating with the male part (43) of the lug (42) in the manner of a hook,
- a rear wall (721), forming a rear stop for the male part (43),
- an upper wall (722) connecting the edge to the rear wall,
with a lower wall (73), for example formed in the calliper (6), or with the return means (9).

8. Brake according to any one of Claims 1 to 7, wherein the return means (9) comprises a right return means (9d) and a left return means (9G), each right or left return means being secured, at one of its ends (90), to the corresponding lateral lug (42), i.e. the right lug (42D) or left lug (42G), by a first fastening means (14), and, at its other end (90'), to the frame (3), by a second fastening means (15).

9. Brake according to Claims 7 and 8,
wherein the return means (9) is a metal leaf spring (9'), an upper part (91) of which is secured to the lateral lug (42), another lower part (92) of which bears against the frame (3), so as to permanently apply the male part (43) in the female part (70), and an intermediate part (93) of which is curved in such a way that the pad assembly (4) can move away from the disc when the application means, typically a piston, is no longer activated at the end of braking.

10. Disc brake (1) according to Claim 1,
**characterized in that** the two pad assemblies (4) each comprise a support (40) assembled to a wear pad (41) and comprising, at each of its lateral ends, a lateral lug (42) for assembly to a brake frame (3), with a right lug (42D) and a left lug (42G), each comprising a plane inclined by an angle α of between 30° and 70° with respect to the transverse direction of the pad assembly, wherein each of the lateral lugs (42, 42D, 42G) has an edge, either a rounded edge (420) intended to form a "cylinder" (160) or a planar edge (421) intended to form a "plane" (161) of the lateral contact (16), in such a way that the right (42D) and left (42G) lugs cooperate with the frame comprising a "plane" (161) to form the contact of the "cylinder on plane" type (16), and so as to make possible a slight lateral movement or clearance under stress of the pad assembly (4) with respect to the frame (3) during a braking operation, from an initial position to a final position.

11. Brake according to Claim 10,
**characterized in that** it comprises return means (9, 9D, 9G), each assembled to the lug (42, 42D, 42g) of a pad assembly, each return means comprising a metal leaf spring (9'), an upper part (91) of which is secured to the lug and another lower part (92) of which bears on the frame (3), so as to be able to permanently apply the male part (43) in the female part (70) of the frame (3), and an intermediate part (93) of which is curved in order that the pad assembly (4) can move away from the disc (2) when the compression (11) is no longer activated at the end of braking.
